# EUROPEAN PATENT APPLICATION

(11) **EP 4 163 849 A1**
(43) Date of publication of application: **12.04.2023**
(21) Application number: 20938997.2
(22) Date of filing: 05.06.2020
(51) Int. Cl.: G06Q 10/10

(54) **GENERATION METHOD, GENERATION PROGRAM, AND GENERATION DEVICE**

(71) Applicant: Fujitsu Limited, Kawasaki-shi, Kanagawa 211-8588 (JP)
(72) Inventor: UNO, Kazuya, Kawasaki-shi, Kanagawa 211-8588 (JP); YAMAMOTO, Dai, Kawasaki-shi, Kanagawa 211-8588 (JP)
(74) Representative: Hoffmann Eitle
(86) International application number: PCT/JP2020/022434
(87) International publication number: WO 2021/245947

(57) **Abstract**

A generation device (100) acquires a plurality of electronic documents (110) and read information (130) generated from a reading result of a paper document (120). The generation device (100) specifies an electronic document (110) corresponding to the acquired read information (130) from among the plurality of acquired electronic documents (110). The generation device (100) generates an electronic document (110) with a signature image including the specified electronic document (110) and a signature image (140) obtained by imaging a signature written or stamped on the paper document (120). The signature is, for example, a seal imprint, a handwritten character string, or the like. As a result, the generation device (100) enables to reduce a work load on a worker applied when generating the electronic document (110) with the signature image.

## Description

### FIELD

The present invention relates to a generation method, a generation program, and a generation device.

### BACKGROUND

Typically, there are organizations that use both of paper documents and electronic documents. For example, there is an organization or the like that uses paper documents in the organization but externally uses electronic documents because other companies to be trading partners or the like desire to exchange electronic documents. For example, when receiving a paper document that is mailed by an employee to a management department, a person in charge in the management department of the organization searches for an electronic document that corresponds to the paper document and is created by the employee and generates an external electronic document for other companies based on the paper document and the searched electronic document.

As related art, for example, there is a technique for storing a plurality of pieces of personal seal information in a single mobile phone terminal device and enabling to select personal seal information to be used with an intention on a sealer side or an intention on an electronic application business operator.

### SUMMARY

### TECHNICAL PROBLEM

However, the related art may increase a work load on a worker applied when an electronic document with a signature corresponding to a paper document is generated. For example, it is not possible for the worker to generate the electronic document with the signature corresponding to the paper document without searching for the electronic document corresponding to the paper document from among the plurality of accumulated electronic documents, for each paper document, and this increases the work load on the worker.

In one aspect, an object of the present invention is to reduce a work load applied when an electronic document to which a signature image corresponding to a paper document is added is generated.

### SOLUTION TO PROBLEM

According to one embodiment, a generation method, a generation program, and a generation device are proposed that acquire read information generated from a reading result of a paper document and generate an electronic document with a signature image including the electronic document and the signature image by adding the signature image obtained by imaging a signature written or stamped on the paper document, to an electronic document corresponding to the acquired read information.

### ADVANTAGEOUS EFFECTS OF INVENTION

According to one aspect, it is possible to reduce a work load applied when an electronic document to which a signature image corresponding to a paper document is added is generated.

### BRIEF DESCRIPTION OF DRAWINGS

FIG. 1 is an explanatory diagram illustrating an example of a generation method according to an embodiment;
FIG. 2 is an explanatory diagram illustrating an example of a business processing system 200;
FIG. 3 is a block diagram illustrating a hardware configuration example of a generation device 100;
FIG. 4 is an explanatory diagram illustrating an example of a data structure of a personnel DB 400;
FIG. 5 is an explanatory diagram illustrating an example of a data structure of a user DB 500;
FIG. 6 is an explanatory diagram illustrating an example of a data structure of an application DB 600;
FIG. 7 is an explanatory diagram illustrating an example of a data structure of a reading DB 700;
FIG. 8 is a block diagram illustrating a hardware configuration example of a business processing terminal 201;
FIG. 9 is a block diagram illustrating a functional configuration example of the generation device 100;
FIG. 10 is an explanatory diagram illustrating an operation example of the generation device 100;
FIG. 11 is an explanatory diagram illustrating an example of registering seal related information;
FIG. 12 is an explanatory diagram illustrating an example of determining validity of a seal based on the seal related information including information used to specify an allowable range of inclination of a seal imprint;
FIG. 13 is an explanatory diagram illustrating an example of determining validity of a seal based on the seal related information including information used to specify an allowable range of a thickness of a line;
FIG. 14 is an explanatory diagram illustrating an example of determining validity of a seal based on the seal related information including information used to specify a representative pressure distribution;
FIG. 15 is an explanatory diagram illustrating an example of determining validity of a seal based on the seal related information including information used to specify a representative red histogram;
FIG. 16 is a flowchart (No. 1) illustrating an example of an overall processing procedure;
FIG. 17 is a flowchart (No. 2) illustrating an example of the overall processing procedure; and
FIG. 18 is a flowchart (No. 3) illustrating an example of the overall processing procedure.

### DESCRIPTION OF EMBODIMENTS

Hereinafter, embodiments of a generation method, a generation program, and a generation device according to the present invention will be described in detail with reference to the drawings.

### (Example of Generation Method According to Embodiment)

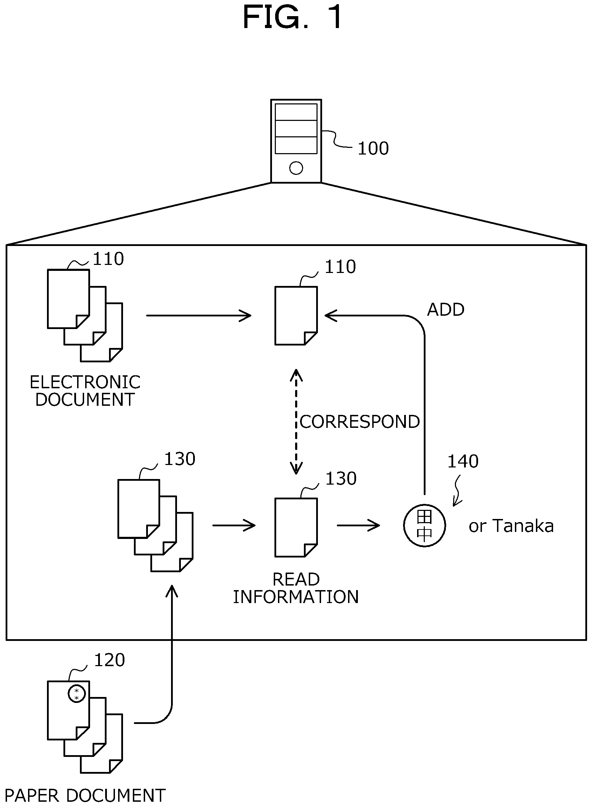

FIG. 1 is an explanatory diagram illustrating an example of a generation method according to an embodiment. A generation device 100 is a computer that can generate an electronic document with a signature image. The signature image is an image of a signature written or stamped on a paper document. The signature is, for example, a seal imprint, a handwritten character string, or the like.

Typically, an act such as an applying a procedure or concluding a contract may be performed using paper documents. Furthermore, when such an act is performed, a personal seal may be further used. For example, when such an act is performed, an intention to confirm, approve, agree, or the like to content of the paper document may be expressed by affixing a seal to the paper document.

On the other hand, in recent years, policies such as Society5.0 or data free flow with trust (DFFT) have been stipulated, and there is a trend to desire to digitize paper documents. For example, there is a trend to desire to globally exchange data or conclude transactions between organizations.

Therefore, there is an increasing number of situations where, if an organization that performs an act for applying a procedure, concluding a contract, or the like by using the paper documents and the personal seals so far does not use the electronic document in an external scene, the organization suffers disadvantages. For example, in a situation in which another organization that the organization wishes to be a trading partner desires to use electronic documents, the organization has to use the electronic documents. The disadvantage is, for example, an economic loss, an opportunity loss, or the like due to an organization' inability to conclude a contract with the another organization that the organization wishes to be the trading partner.

However, when the organization digitizes all the paper documents, there is a possibility to increase personnel costs and monetary costs and impair business continuity, and there is a case where it is difficult for the organization to digitize all the paper documents. Therefore, it is considered that both of the paper documents and the electronic documents are used in the organization. For example, it is considered to adopt a policy to continue to use the paper documents and the personal seals internally and to use the electronic documents externally in the organization.

Specifically, in the organization, employees at a plurality of sites affix seals to paper documents such as contract documents or procedure documents, and then mail the paper documents to the management department, and also transmit an electronic document that indicates the same content as the paper document to the management department. Therefore, in the management department, the paper documents and the electronic documents are accumulated. Then, as monthly processing, the person in charge of the management department searches for an electronic document corresponding to the paper document from among the multiple electronic documents accumulated in the management department for each paper document and generates an external electronic document for external organizations based on the paper document and the searched electronic document.

In this case, when generating an external electronic document, a work load on the person in charge in the management department increases. For example, the person in charge in the management department has to perform a work for searching for an electronic document corresponding to the paper document, from among the plurality of electronic documents accumulated in the management department, for each paper document. Therefore, as the number of paper documents increases or as the number of electronic documents increases, the work load on the person in charge in the management department increases.

Therefore, in the present embodiment, a generation method that can reduce a work load applied when a new electronic document is generated will be described.

For example, according to the present embodiment, it is possible to search for an electronic document corresponding to an affixed paper document from among the plurality of electronic documents accumulated in the management department, based on the affixed paper document received by the management department and to easily generate a new electronic document.

In FIG. 1, (1-1) the generation device 100 acquires a plurality of electronic documents 110 and read information 130 generated from a reading result of a paper document 120. The electronic document 110 is data in a format in which a value for each item is clearly described. The electronic document 110 is different from, for example, a document image obtained by imaging the paper document 120. The paper document 120 is a physical document. The paper document 120 may be formed of, for example, a material other than paper.

The reading result is a document image obtained by imaging the paper document 120. The read information 130 includes, for example, information used to specify content written in the paper document 120. The read information 130 includes information used to specify a value for each item written on the paper document 120, specifically. The value of the item is, for example, a character string.

The generation device 100 acquires, for example, the plurality of electronic documents 110 received in the past. The generation device 100 acquires, for example, the read information 130 from among the plurality of pieces of read information 130 respectively generated from the reading results of the different paper documents 120.

(1-2) The generation device 100 specifies an electronic document 110 corresponding to the acquired read information 130, from among the plurality of acquired electronic documents 110. The generation device 100 analyzes written content in the paper document 120 that is a reading source of the acquired read information 130, based on the acquired read information 130. The generation device 100 compares the analyzed written content with the value of the each item of the plurality of electronic documents 110 and specifies the electronic document 110 corresponding to the acquired read information 130.

(1-3) The generation device 100 generates an electronic document 110 with a signature image that includes the specified electronic document 110 and a signature image 140 that is an image of a signature written or stamped on the paper document 120. The signature is, for example, a seal imprint, a handwritten character string, or the like. The handwritten character string is, for example, a name of a person. The generation device 100 generates the electronic document 110 with the signature image by adding the signature image 140 that is the image of the signature written or stamped on the paper document 120, for example, to the specified electronic document 110.

As a result, the generation device 100 can generate the electronic document 110 with the signature image. The electronic document 110 with the signature image is used externally, for example. Therefore, when generating the electronic document 110 with the signature image, the generation device 100 can reduce work loads on workers such as the person in charge of the management department.

Furthermore, the generation device 100 can make it easier to use the paper document 120 and the electronic document 110 together in an organization. Therefore, the generation device 100 can reduce personnel costs and monetary costs in the organization and can make it easier to maintain business continuity.

Furthermore, the generation device 100 may further generate signature information relating to the electronic document 110 with the signature image and add the signature information to the electronic document 110 with the signature image. The signature information is, for example, an electronic signature using a private key. As a result, in addition, when generating the electronic document 110 with the signature image, the generation device 100 can reduce work loads on workers such as the person in charge of the management department.

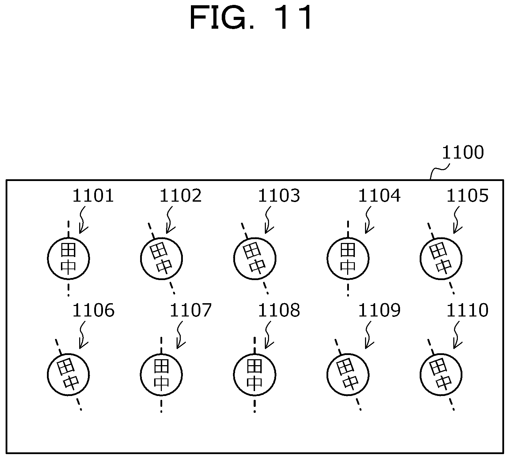

Furthermore, in addition, when further generating the electronic document 110 with the signature image, the generation device 100 may determine validity of a signature based on the signature image 140 that is the image of the signature written or stamped on the paper document 120. In this case, for example, when the signature is valid, the generation device 100 generates the electronic document 110 with the signature image, and when the signature is invalid, the generation device 100 does not generate the electronic document 110 with the signature image and outputs an alert. As a result, the generation device 100 can reduce a risk of misuse of a personal seal. Specific examples of determining validity of a signature will be described later, for example, with reference to FIGs. 11 to 15.

Here, a case has been described where the electronic document 110 with the signature image is used externally. However, the present invention is not limited to this. For example, the electronic document 110 with the signature image may be used when a procedure is performed in a certain organization.

Here, a case has been described where the generation device 100 specifies the electronic document 110 corresponding to the acquired read information 130 from among the plurality of acquired electronic documents 110. However, the present invention is not limited to this. For example, there may be a case where the read information 130 is associated with the electronic document 110 in advance by a user or the like and the generation device 100 acquires the electronic document 110 associated with the acquired read information 130.

### (Example of Business Processing System 200)

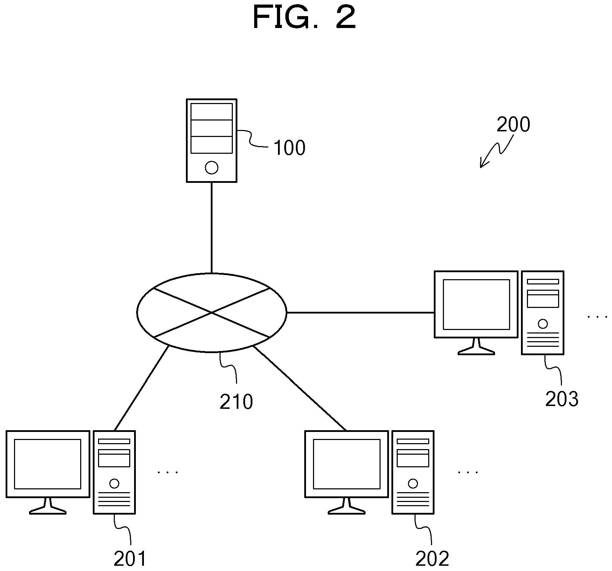

Next, an example of a business processing system 200 of a specific organization to which the generation device 100 illustrated in FIG. 1 is applied will be described with reference to FIG. 2.

FIG. 2 is an explanatory diagram illustrating an example of the business processing system 200. In FIG. 2, the business processing system 200 includes the generation device 100, one or more business processing terminals 201, one or more management department terminals 202, and one or more external organization terminals 203.

In the business processing system 200, the generation device 100 and the business processing terminal 201 are connected via a wired or wireless network 210. The network 210 is, for example, a local area network (LAN), a wide area network (WAN), the Internet, or the like.

Furthermore, in the business processing system 200, the generation device 100 and the management department terminal 202 are connected via the wired or wireless network 210. Furthermore, in the business processing system 200, the generation device 100 and the external organization terminal 203 are connected via the wired or wireless network 210.

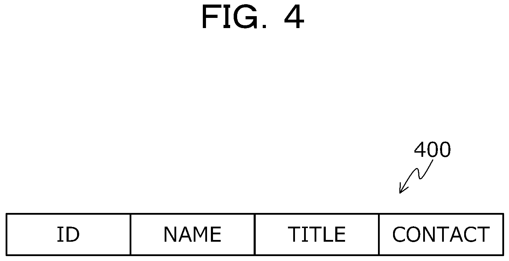

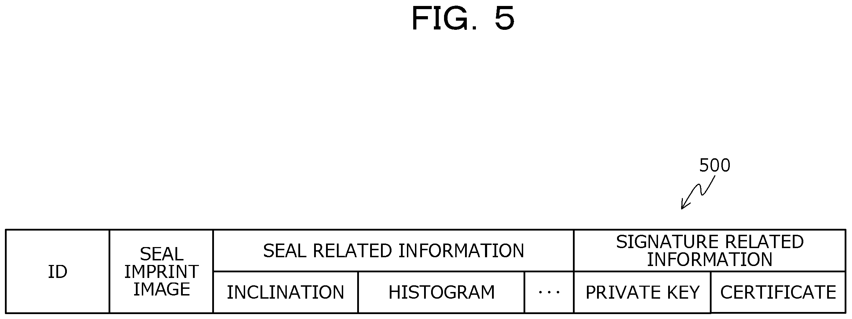

The generation device 100 is a computer provided in a management department of a specific organization. The generation device 100 stores information used to specify a person in the specific organization using a personnel DB 400 to be described later with reference to FIG. 4. The generation device 100 stores user information used when validity of a signature written or stamped on a paper document is determined, using a user DB 500 to be described later with reference to FIG. 5.

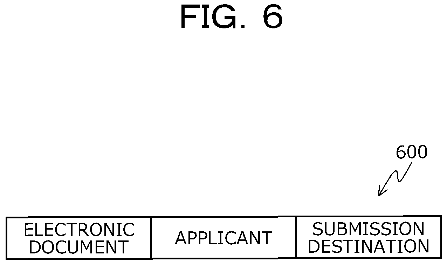

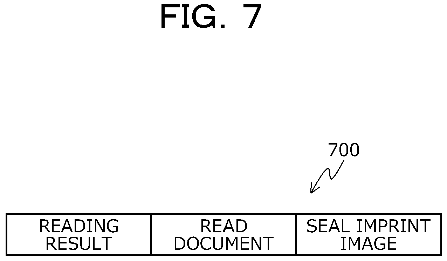

The generation device 100 receives electronic documents from the business processing terminal 201 and accumulates the electronic documents. The electronic document is stored, for example, using an application DB 600 to be described later with reference to FIG. 6. The generation device 100 receives read information generated from a reading result of the paper document from the management department terminal 202 and accumulates the read information. The read information is stored, for example, using a reading DB 700 to be described later with reference to FIG. 7. The generation device 100 specifies an electronic document corresponding to the paper document from among the plurality of accumulated electronic documents, for each paper document, generates an external electronic document with a signature image based on the specified electronic document together with the signature information, and outputs the electronic document. An output destination is, for example, the external organization terminal 203.

When generating the external electronic document with the signature image, the generation device 100 may determine the validity of the signature written or stamped on the paper document, based on the personnel DB 400 to be described later with reference to FIG. 4 and the user DB 500 to be described later with reference to FIG. 5. In this case, if the signature is valid, the generation device 100 generates the external electronic document with the signature image, and if the signature is invalid, the generation device 100 does not generate the external electronic document with the signature image and outputs an alert. The generation device 100 is, for example, a server, a personal computer (PC), or the like.

The business processing terminal 201 is a computer that is provided in a business department of a specific organization and used by an employee. The business processing terminal 201 generates an electronic document based on an operation input by the employee and transmits the electronic document to the generation device 100. The employee creates, for example, a paper document corresponding to the electronic document and mails the paper document to the management department. The business processing terminal 201 is, for example, a PC, a tablet terminal, a smartphone, or the like.

The management department terminal 202 is a computer that is provided in a management department of a specific organization and is used by a person in charge. The management department terminal 202 reads the paper document based on the operation input by the person in charge and transmits read information generated from the reading result of the paper document to the generation device 100. The management department terminal 202 is, for example, a PC, a tablet terminal, a smartphone, or the like.

The external organization terminal 203 is a computer that is provided in an external organization different from the specific organization. The external organization is, for example, an organization to be a trading partner of the specific organization. The external organization terminal 203 receives an electronic document and outputs the electronic document to be referred by a person in the external organization. The external organization terminal 203 is, for example, a PC, a tablet terminal, a smartphone, or the like.

Here, a case has been described where the generation device 100 is a device different from the business processing terminal 201. However, the present invention is not limited to this. For example, the generation device 100 may be integrated with the business processing terminal 201.

Here, a case has been described where the generation device 100 is a device different from the management department terminal 202. However, the present invention is not limited to this. For example, the generation device 100 may be integrated with the management department terminal 202.

Here, a case has been described where the business processing terminal 201 is a device different from the management department terminal 202. However, the present invention is not limited to this. For example, the business processing terminal 201 may be integrated with the management department terminal 202.

### (Hardware Configuration Example of Generation Device 100)

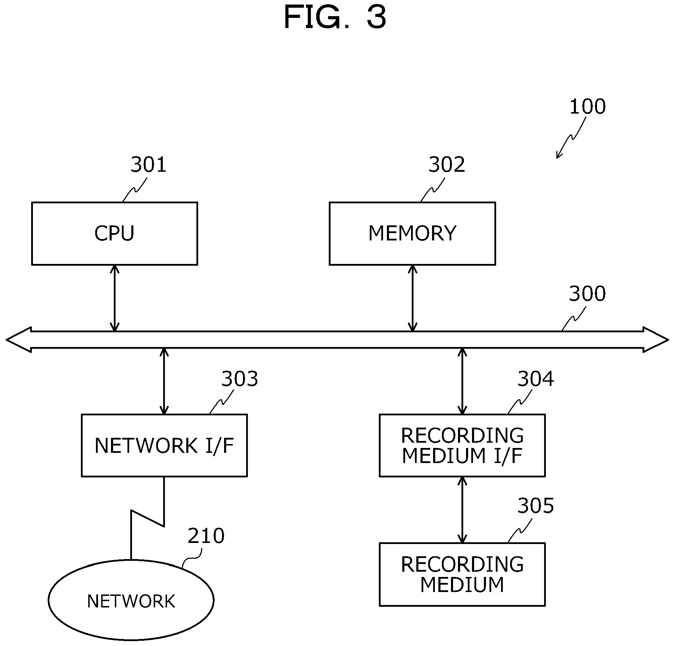

Next, a hardware configuration example of the generation device 100 will be described with reference to FIG. 3.

FIG. 3 is a block diagram illustrating a hardware configuration example of the generation device 100. In FIG. 3, the generation device 100 includes a central processing unit (CPU) 301, a memory 302, a network interface (I/F) 303, a recording medium I/F 304, and a recording medium 305. Furthermore, each of these components is connected to each other by a bus 300.

Here, the CPU 301 performs overall control of the generation device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is connected to the network 210 through a communication line, and is connected to another computer through the network 210. Then, the network I/F 303 manages an interface between the network 210 and the inside, and controls input and output of data from another computer. The network I/F 303 includes, for example, a modem, a LAN adapter, or the like.

The recording medium I/F 304 controls reading and writing of data from and to the recording medium 305 under control of the CPU 301. The recording medium I/F 304 is, for example, a disk drive, a solid state drive (SSD), a universal serial bus (USB) port, or the like. The recording medium 305 is a nonvolatile memory that stores data written under control of the recording medium I/F 304. The recording medium 305 is, for example, a disk, a semiconductor memory, a USB memory, or the like. The recording medium 305 may be attachable to and detachable from the generation device 100.

The generation device 100 may include, for example, a keyboard, a mouse, a display, a printer, a scanner, a microphone, a speaker, or the like in addition to the above-described components. Furthermore, the generation device 100 may include a plurality of the recording medium I/Fs 304 and the recording media 305. Furthermore, the generation device 100 does not have to include the recording medium I/F 304 and the recording medium 305.

### (Example of Data Structure of Personnel DB 400)

Next, an example of a data structure of the personnel DB 400 will be described with reference to FIG. 4. The personnel DB 400 is implemented by a storage area, for example, the memory 302, the recording medium 305, or the like of the generation device 100 illustrated in FIG. 3.

FIG. 4 is an explanatory diagram illustrating an example of the data structure of the personnel DB 400. As illustrated in FIG. 4, the personnel DB 400 includes fields of an ID, a name, a title, and a contact. In the personnel DB 400, personnel information is stored as a record by setting information in each field for each person of an organization.

In the field of the ID, an ID used to identify a person who uses a personal seal in the organization is set. In the field of the name, a name added to the person who uses the personal seal in the organization is set. In the field of the title, a title of the person who uses the personal seal in the organization is set. In the field of the contact, a contact corresponding to the person who uses the personal seal in the organization is set. The contact is, for example, a mail address.

(Example of Data Structure of User DB 500)

Next, an example of a data structure of the user DB 500 will be described with reference to FIG. 5. The user DB 500 is implemented by a storage area, for example, the memory 302, the recording medium 305, or the like of the generation device 100 illustrated in FIG. 3.

FIG. 5 is an explanatory diagram illustrating an example of the data structure of the user DB 500. As illustrated in FIG. 5, the user DB 500 includes fields of an ID, a seal imprint image, seal related information, and signature related information. In the user DB 500, user information is stored as a record by setting information in each field for each person in the organization.

In the field of the ID, an ID used to identify a person who uses a personal seal in the organization is set. In the field of the seal imprint image, a seal imprint image that is an image of a seal imprint to be a sample, generated based on the seal imprint actually affixed by the person using the personal seal is set. In the field of the seal related information, seal related information representing features of the seal imprint to be the sample is set.

In the field of the seal related information, for example, fields of inclination, a histogram, or the like are included. In the field of the inclination, an allowable range of inclination of a seal imprint that reflects a person's habit when the person actually uses the personal seal to affix the seal is set. The allowable range is, for example, generated based on an average value of inclinations of one or more seal imprints affixed by the person by actually using the personal seal.

In the field of the histogram, a histogram with a color of a seal imprint that reflects features of a stamp pad used when the person actually uses the personal seal to affix the seal is set. The histogram is, for example, a graph indicating how much an element with each red brightness is included in a seal imprint. The histogram is generated, for example, based on an average histogram of the histograms with the colors of the one or more seal imprints affixed by the person by actually using the personal seal.

Furthermore, the field of the seal related information, for example, may include fields of a thickness, a pressure distribution, or the like. In the field of the thickness, an allowable range of a thickness of a line of a seal imprint that reflects a person's habit when the person actually uses the personal seal to affix a seal is set. The allowable range is generated, for example, based on an average value of thicknesses of one or more seal imprints affixed by the person by actually using the personal seal.

In the field of the pressure distribution, a distribution graph of a pressure relating to a seal imprint that reflects the person's habit when the person actually uses the personal seal to affix the seal is set. The distribution graph is, for example, a graph indicating how strongly each portion of the seal imprint is pressed. The distribution graph is generated, for example, based on an average graph of the distribution graph of the pressure of the one or more seal imprints affixed by the person by actually using the personal seal.

In the field of the signature related information, reference information that enables to generate signature information corresponding to the person who uses the personal seal in the organization is set. The field of the signature related information includes, for example, fields of a private key and a certificate. In the field of the private key, a private key corresponding to the person who uses the personal seal is set. In the field of the certificate, a certificate corresponding to the person who uses the personal seal is set. The certificate is information that enables to verify certainty of a public key against the private key.

### (Example of Data Structure of Application DB 600)

Next, an example of a data structure of the application DB 600 will be described with reference to FIG. 6. The application DB 600 is implemented by a storage area, for example, the memory 302, the recording medium 305, or the like of the generation device 100 illustrated in FIG. 3.

FIG. 6 is an explanatory diagram illustrating an example of the data structure of the application DB 600. As illustrated in FIG. 6, the application DB 600 includes fields of an electronic document, an applicant, and a submission destination. In the application DB 600, application information is stored as a record by setting information in each field for each electronic document.

In the field of the electronic document, content of an electronic document is set. In the field of the electronic document, for example, a value for each item indicated by the electronic document is set. In the field of the applicant, an ID used to identify an applicant who has created the electronic document is set. In the field of the submission destination, information used to identify a submission destination to which an external electronic document with a signature image, generated based on the electronic document, is submitted is set.

### (Example of Data Structure of Reading DB 700)

Next, an example of a data structure of the reading DB 700 will be described with reference to FIG. 7. The reading DB 700 is implemented by a storage area, for example, the memory 302, the recording medium 305, or the like of the generation device 100 illustrated in FIG. 3.

FIG. 7 is an explanatory diagram illustrating an example of the data structure of the reading DB 700. As illustrated in FIG. 7, the reading DB 700 includes fields of a reading result, a read document, and a seal imprint image. The reading DB 700 stores read information as a record, by setting information in each field for each paper document.

In the field of the reading result, a reading result of a paper document is set. The reading result is, for example, a document image obtained by imaging a paper document. In the field of the read document, written content of the paper document is set. In the field of the read document, for example, a value for each item that is recognized from the paper document by an optical character recognition/reader (OCR) is set. In the field of the seal imprint image, a seal imprint image obtained by imaging a seal imprint written on the paper document, based on the reading result of the paper document is set.

### (Hardware Configuration Example of Business Processing Terminal 201)

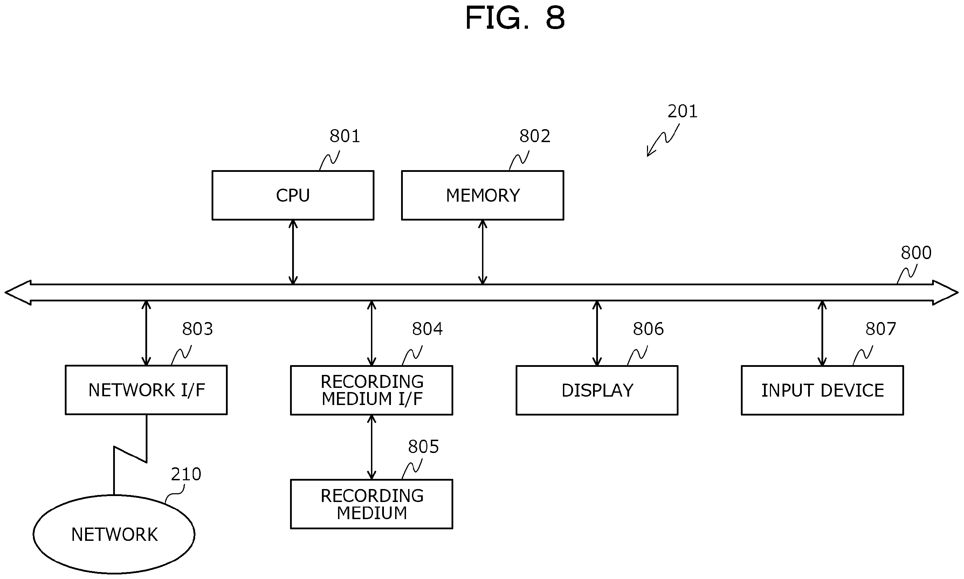

Next, a hardware configuration example of the business processing terminal 201 included in the business processing system 200 illustrated in FIG. 2 will be described with reference to FIG. 8.

FIG. 8 is a block diagram illustrating a hardware configuration example of the business processing terminal 201. In FIG. 8, the business processing terminal 201 includes a CPU 801, a memory 802, a network I/F 803, a recording medium I/F 804, a recording medium 805, a display 806, and an input device 807. Furthermore, the components are connected to each other by a bus 800.

Here, the CPU 801 performs overall control of the business processing terminal 201. The memory 802 includes, for example, a ROM, a RAM, a flash ROM, or the like. Specifically, for example, the flash ROM or the ROM stores various programs, and the RAM is used as a work area for the CPU 801. The programs stored in the memory 802 are loaded into the CPU 801 to cause the CPU 801 to execute coded processing.

The network I/F 803 is connected to the network 210 through a communication line, and is connected to another computer via the network 210. Then, the network I/F 803 manages an interface between the network 210 and the inside, and controls input and output of data from another computer. The network I/F 803 is, for example, a modem, a LAN adapter, or the like.

The recording medium I/F 804 controls reading and writing of data from and to the recording medium 805 under the control of the CPU 801. The recording medium I/F 804 is, for example, a disk drive, an SSD, a USB port, or the like. The recording medium 805 is a nonvolatile memory that stores data written under the control of the recording medium I/F 804. The recording medium 805 is, for example, a disk, a semiconductor memory, a USB memory, or the like. The recording medium 805 may be attachable to and detachable from the business processing terminal 201.

The display 806 displays data such as a document, an image, or function information, as well as a cursor, an icon, or a tool box. The display 806 is, for example, a cathode ray tube (CRT), a liquid crystal display, an organic electroluminescence (EL) display, or the like. The input device 807 has keys for inputting characters, numbers, various instructions, or the like, and inputs data. The input device 807 may be a keyboard, a mouse, or the like, or may be a touch-panel input pad, a numeric keypad, or the like.

The business processing terminal 201 may include, for example, a printer, a scanner, a microphone, a speaker, and the like, in addition to the above-described components. Furthermore, the business processing terminal 201 may include a plurality of the recording medium I/Fs 804 or a plurality of the recording media 805. Furthermore, the business processing terminal 201 does not have to include the recording medium I/F 804 and the recording medium 805.

### (Hardware Configuration Example of Management Department Terminal 202)

Since a hardware configuration example of the management department terminal 202 included in the business processing system 200 illustrated in FIG. 2 is similar to, for example, the hardware configuration example of the business processing terminal 201 illustrated in FIG. 8, description thereof will be omitted.

### (Hardware Configuration Example of External Organization Terminal 203)

Since a hardware configuration example of the external organization terminal 203 included in the business processing system 200 illustrated in FIG. 2 is similar to, for example, the hardware configuration example of the business processing terminal 201 illustrated in FIG. 8, description thereof will be omitted.

### (Functional Configuration Example of Generation Device 100)

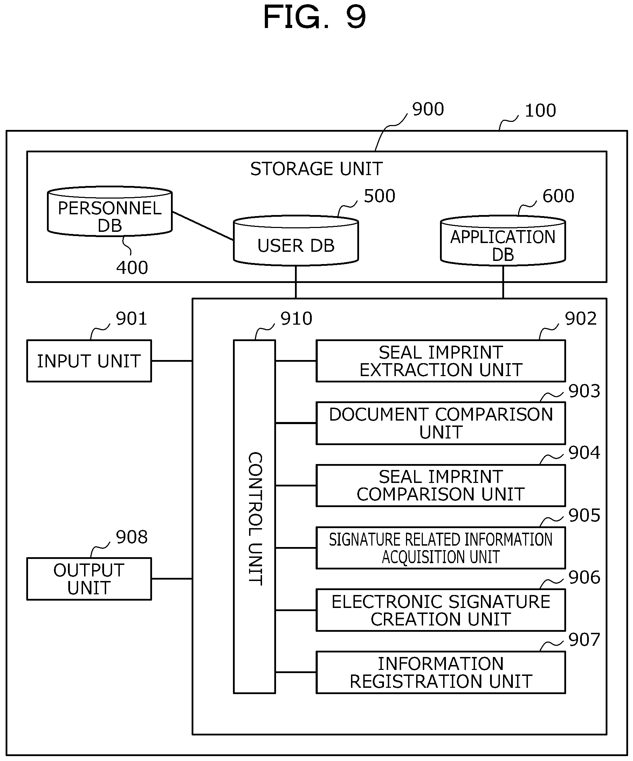

Next, a functional configuration example of the generation device 100 will be described with reference to FIG. 9.

FIG. 9 is a block diagram illustrating the functional configuration example of the generation device 100. The generation device 100 includes a storage unit 900, an input unit 901, a seal imprint extraction unit 902, a document comparison unit 903, a seal imprint comparison unit 904, a signature related information acquisition unit 905, an electronic signature creation unit 906, an information registration unit 907, and an output unit 908.

The storage unit 900 is implemented by a storage area, for example, the memory 302, the recording medium 305, or the like illustrated in FIG. 3. Hereinafter, a case where the storage unit 900 is included in the generation device 100 will be described. However, the present invention is not limited to this. For example, the storage unit 900 may be included in a device different from the generation device 100, and content stored in the storage unit 900 may be able to be referred to by the generation device 100.

Specifically, for example, the input unit 901 and the output unit 908 implement functions thereof by causing the CPU 301 to execute a program stored in a storage area such as the memory 302 or the recording medium 305 illustrated in FIG. 3 or by the network I/F 303.

The seal imprint extraction unit 902 to the information registration unit 907 function as an example of a control unit 910. Specifically, for example, the seal imprint extraction unit 902 to the information registration unit 907 implement functions thereof by causing the CPU 301 to execute a program stored in the storage area such as the memory 302 or the recording medium 305 illustrated in FIG. 3.

Specifically, for example, the control unit 910 implements functions thereof by causing the CPU 301 to execute a program stored in the storage area such as the memory 302 or the recording medium 305 illustrated in FIG. 3. A processing result of each functional unit is stored in, for example, a storage area such as the memory 302 or the recording medium 305 illustrated in FIG. 3.

The storage unit 900 stores various types of information referred to or updated in processing of each functional unit. The storage unit 900 stores a plurality of electronic documents. The electronic document is, for example, data in a document format. The electronic document is, for example, data in a format in which a value for each item is clearly described. The electronic document is, for example, data in a tabular format. The electronic document is different from a document image obtained by imaging a paper document, for example. The paper document is a physical document. The paper document may be formed of, for example, a material other than paper. The storage unit 900 stores, for example, a plurality of electronic documents using the application DB 600.

The storage unit 900 stores a plurality of pieces of read information respectively generated from reading results of different paper documents The reading result is, for example, a document image obtained by imaging a paper document. The read information includes, for example, information used to specify content written in the paper document. The read information includes, specifically, information used to specify a value for each item written in the paper document. The value of the item is, for example, a character string. The storage unit 900 stores, for example, the plurality of pieces of read information using the reading DB 700.

The storage unit 900 stores an electronic document with a signature image. The storage unit 900 stores, for example, an electronic document with a signature image generated by the information registration unit 907. The signature image is, for example, a seal imprint image obtained by imaging a seal imprint of a personal seal written on the paper document. The signature image is, for example, a character string image obtained by imaging a handwritten character string written on the paper document. The handwritten character string is, for example, a character string indicating a name of a person belonging to an organization.

The storage unit 900 may further store signature information in association with the electronic document with the signature image. The storage unit 900 stores, for example, signature information generated by the electronic signature creation unit 906. The signature information is generated by encrypting a hash value of the electronic document with the signature image, for example, using a private key.

The storage unit 900 stores reference information used when it is determined whether or not a signature written or stamped on the paper document is valid. The storage unit 900 stores, for example, user information used when it is determined whether or not the signature written or stamped on the paper document is valid using the user DB 500. Specifically, the storage unit 900 stores a correct signature image.

Specifically, the storage unit 900 stores information regarding features of the correct signature image. More specifically, the storage unit 900 stores an allowable range of inclination of the correct signature image. More specifically, the storage unit 900 stores an allowable range of a thickness of a line forming the correct signature image. More specifically, the storage unit 900 stores a distribution situation of the thickness of the line forming the correct signature image. More specifically, the storage unit 900 stores a color of the correct signature image.

The input unit 901 acquires various types of information used for processing of each functional unit. The input unit 901 stores the acquired various types of information in the storage unit 900 or outputs the acquired various types of information to each functional unit. Furthermore, the input unit 901 may output the various types of information stored in the storage unit 900 to each functional unit. The input unit 901 acquires various types of information, for example, based on an operation input of a user. The input unit 901 may receive various types of information, for example, from a device different from the generation device 100.

The input unit 901 receives input of the electronic document and stores the electronic document in the storage unit 900. For example, by receiving the electronic document from a business processing device, the input unit 901 receives the input of the electronic document and stores the electronic document in the application DB 600. Furthermore, the input unit 901 acquires the plurality of electronic documents stored in the storage unit 900 and transmits the electronic documents to the control unit 910. The input unit 901 acquires the plurality of electronic documents stored in the application DB 600, for example, at a predetermined timing and transmits the electronic documents to the control unit 910.

The input unit 901 receives input of the read information and stores the read information in the storage unit 900. For example, by receiving the read information from the management department terminal 202, the input unit 901 receives the input of the read information and stores the read information in the reading DB 700. Furthermore, the input unit 901 acquires any piece of the read information stored in the storage unit 900 and transmits the read information to the control unit 910. The input unit 901 acquires the specified read information, for example, based on an operation input of the user and transmits the read information to the control unit 910. The input unit 901 acquires any piece of the read information stored in the reading DB 700, for example, at a predetermined timing and transmits the read information to the control unit 910.

Furthermore, the input unit 901 may acquire the plurality of pieces of read information respectively generated from the reading results of the different paper documents, stored in the storage unit 900, and transmit the read information to the control unit 910. The input unit 901 acquires the plurality of pieces of read information stored in the reading DB 700, for example, at a predetermined timing and transmits the read information to the control unit 910. As a result, the input unit 901 can collectively process the plurality of pieces of read information and can reduce a work load on the user.

The input unit 901 receives input of one or more signature images by the user. The input unit 901 receives input of a seal imprint image obtained by imaging a seal imprint that is actually stamped by the user, for example, by using a scanner. At this time, it is preferable for the person who owns the personal seal, as the user, to input the seal imprint image obtained by imaging the actually stamped seal imprint to the input unit 901 via the scanner.

The input unit 901 may receive a start trigger to start processing of any one of the functional units. The start trigger is, for example, a predetermined operation input made by the user. The start trigger may be, for example, reception of predetermined information from another computer. The start trigger may be, for example, output of predetermined information by any one of the functional units. The start trigger may be, for example, detection of a signal that is periodically issued by the generation device 100. The input unit 901 receives, for example, the detection of the signal that is periodically issued by the generation device 100 as a start trigger to start processing of the control unit 910.

The control unit 910 specifies the electronic document corresponding to the acquired read information, among the plurality of acquired electronic documents by the document comparison unit 903. The document comparison unit 903 specifies an electronic document that includes a character string that is the same as or similar to a character string written on the paper document, from among the plurality of acquired electronic documents, based on the acquired read information and the character string included in each of the plurality of acquired electronic documents. As a result, the document comparison unit 903 can specify a pair of corresponding electronic document and read information.

The document comparison unit 903 specifies an electronic document that includes a character string that is the same as or similar to a character string written in a predetermined item of the paper document as a predetermined item, from among the plurality of acquired electronic documents. The predetermined item is, for example, an item of a reference number or the like. As a result, the document comparison unit 903 can specify a pair of corresponding electronic document and read information.

The control unit 910 may specify an electronic document corresponding to any one of the plurality of pieces of acquired read information from among the plurality of acquired electronic documents, by the document comparison unit 903. The document comparison unit 903 specifies an electronic document including a character string that is the same as or similar to a character string written on a paper document that is a reading source of one piece of the read information, from among the plurality of electronic documents, based on the one piece of the read information and the character string included in each of the plurality of electronic documents. As a result, the document comparison unit 903 can specify a pair of corresponding electronic document and read information. Furthermore, the document comparison unit 903 can collectively process the plurality of pieces of read information and reduce a work load on the user.

The document comparison unit 903 specifies an electronic document including a character string that is the same as or similar to a character string written on a predetermined item of the paper document that is the reading source of the one piece of the read information as a predetermined item, from among the plurality of electronic documents. As a result, the document comparison unit 903 can specify a pair of corresponding electronic document and read information. Furthermore, the document comparison unit 903 can collectively process the plurality of pieces of read information and reduce a work load on the user.

The control unit 910 determines whether or not a signature written or stamped on the paper document is valid with reference to the storage unit 900, by the seal imprint extraction unit 902 and the seal imprint comparison unit 904. The seal imprint extraction unit 902 extracts a signature image obtained by imaging a signature written or stamped on the paper document, based on the reading result of the paper document. As a result, the seal imprint extraction unit 902 can acquire a seal imprint image to be determined.

The seal imprint comparison unit 904 determines whether or not the signature image obtained by imaging the signature written or stamped on the paper document is the same as or similar to the correct signature image with reference to the storage unit 900, and in a case where the signature image is the same as or similar to the correct signature image, the seal imprint comparison unit 904 determines that the signature written or stamped on the paper document is valid.

The seal imprint comparison unit 904 acquires the correct signature image, for example, with reference to the user DB 500. Then, the seal imprint comparison unit 904 calculates a similarity in a case where inclinations of the signature image obtained by imaging the signature written or stamped on the paper document and the correct signature image are aligned, and in a case where the similarity is equal to or more than a threshold, the seal imprint comparison unit 904 determines that the signature written or stamped on the paper document is valid. As a result, the seal imprint comparison unit 904 can determine whether or not a signature is valid and can make it easier to prevent unauthorized use of a personal seal.

Furthermore, the seal imprint comparison unit 904 determines whether or not features of the signature image obtained by imaging the signature written or stamped on the paper document match the features of the correct signature image, with reference to the storage unit 900. Here, in a case of determining that the features match, the seal imprint comparison unit 904 determines that the signature written or stamped on the paper document is valid. On the other hand, in a case of determining that the features do not match, the seal imprint comparison unit 904 determines that the signature written or stamped on the paper document is invalid.

The seal imprint comparison unit 904 acquires an allowable range of inclination of the correct signature image, for example, with reference to the user DB 500. Then, the seal imprint comparison unit 904 determines whether or not the inclination of the signature image obtained by imaging the signature written or stamped on the paper document is within the allowable range of the inclination of the correct signature image. Here, in a case where the inclination is within the allowable range, the seal imprint comparison unit 904 determines that the features of the signature image obtained by imaging the signature written or stamped on the paper document match the features of the correct signature image, and determines that the signature is valid.

On the other hand, in a case where the inclination is not within the allowable range, the seal imprint comparison unit 904 determines that the features of the signature image obtained by imaging the signature written or stamped on the paper document do not match the features of the correct signature image, and determines that the signature is invalid. As a result, the seal imprint comparison unit 904 can determine whether or not the signature is valid based on a habit of an authorized person who owns the personal seal at the time of affixing and can make it easier to prevent unauthorized use of the personal seal.

The seal imprint comparison unit 904 acquires an allowable range of the thickness of the line forming the correct signature image, for example, with reference to the user DB 500. Then, the seal imprint comparison unit 904 determines whether or not the thickness of the line forming the signature image obtained by imaging the signature written or stamped on the paper document is within the allowable range of the thickness of the line forming the correct signature image. Here, in a case where the thickness is within the allowable range, the seal imprint comparison unit 904 determines that the features of the signature image obtained by imaging the signature written or stamped on the paper document match the features of the correct signature image, and determines that the signature is valid.

On the other hand, in a case where the thickness is not within the allowable range, the seal imprint comparison unit 904 determines that the features of the signature image obtained by imaging the signature written or stamped on the paper document do not match the features of the correct signature image, and determines that the signature is invalid. As a result, the seal imprint comparison unit 904 can determine whether or not the signature is valid based on a habit of an authorized person who owns the personal seal at the time of affixing and can make it easier to prevent unauthorized use of the personal seal.

The seal imprint comparison unit 904 acquires a distribution situation of the thickness of the line forming the correct signature image with reference to the user DB 500. The distribution situation corresponds to the distribution situation of the pressure at the time of affixing. Then, the seal imprint comparison unit 904 determines whether or not the distribution situation of the thickness of the line forming the signature image obtained by imaging the signature written or stamped on the paper document matches the distribution situation of the thickness of the line forming the correct signature image. Here, in a case where the distribution situations match, the seal imprint comparison unit 904 determines that the features of the signature image obtained by imaging the signature written or stamped on the paper document match the features of the correct signature image, and determines that the signature is valid.

On the other hand, in a case where the distribution situations do not match, the seal imprint comparison unit 904 determines that the features of the signature image obtained by imaging the signature written or stamped on the paper document do not match the features of the correct signature image and determines that the signature is invalid. As a result, the seal imprint comparison unit 904 can determine whether or not the signature is valid based on the features of the stamp pad used when an authorized person who owns the personal seal affixes a seal and can make it easier to prevent unauthorized use of the personal seal.

The seal imprint comparison unit 904 acquires a histogram with a color of the correct signature image with reference to the user DB 500. Then, the seal imprint comparison unit 904 determines whether or not a color of the signature image obtained by imaging the signature written or stamped on the paper document matches the color of the correct signature image. Specifically, the seal imprint comparison unit 904 determines whether or not a red histogram of the signature image obtained by imaging the signature written or stamped on the paper document matches a red histogram of the correct signature image. Here, in a case where the colors match each other, the seal imprint comparison unit 904 determines that the features of the signature image obtained by imaging the signature written or stamped on the paper document match the features of the correct signature image, and determines that the signature is valid.

On the other hand, in a case where the colors do not match each other, the seal imprint comparison unit 904 determines that the features of the signature image obtained by imaging the signature written or stamped on the paper document do not match the features of the correct signature image and determines that the signature is invalid. As a result, the seal imprint comparison unit 904 can determine whether or not the signature is valid based on the features of the stamp pad used when an authorized person who owns the personal seal affixes a seal and can make it easier to prevent unauthorized use of the personal seal.

The control unit 910 generates an electronic document with a signature image including the specified electronic document and the signature image by adding the signature image obtained by imaging the signature written or stamped on the paper document to the specified electronic document, by the electronic signature creation unit 906. As a result, the electronic signature creation unit 906 can generate an external electronic document with a signature image.

In a case where it is determined by the seal imprint comparison unit 904 that the signature images are the same as or similar to each other, the electronic signature creation unit 906 generates the electronic document with the signature image. As a result, the electronic signature creation unit 906 can generate the external electronic document with the signature image only in a case where it is determined that the personal seal is validly used.

In a case where it is determined by the seal imprint comparison unit 904 that the features of the signature images match each other, the electronic signature creation unit 906 generates the electronic document with the signature image. As a result, the electronic signature creation unit 906 can generate the external electronic document with the signature image only in a case where it is determined that the personal seal is validly used.

The control unit 910 generates signature information related to the electronic document with the signature image generated by the signature related information acquisition unit 905 and the electronic signature creation unit 906. The signature related information acquisition unit 905 specifies a private key and a certificate corresponding to the signature written or stamped on the paper document and transmits the private key and the certificate to the electronic signature creation unit 906. For example, the signature related information acquisition unit 905 acquires the private key and the certificate stored in the user DB 500 in association with the correct signature image that is determined to be the same or similar to the signature image obtained by imaging the signature written or stamped on the paper document, by the seal imprint comparison unit 904.

The electronic signature creation unit 906 generates the signature information by using the private key and the certificate specified by the signature related information acquisition unit 905. The electronic signature creation unit 906 creates an electronic signature by encrypting a hash value of the generated electronic document with the signature image, for example, by using the private key. As a result, it is possible to generate the signature information associated with the external electronic document with the signature image.

The control unit 910 generates the information regarding the features of the correct signature image based on the one or more signature images of which input is received by the information registration unit 907 and stores the information in the storage unit 900. The information registration unit 907 generates the information regarding the features of the correct signature image, based on the one or more signature images of which the input has been received and stores the information in the user DB 500.

The information registration unit 907 generates, for example, the allowable range of the inclination of the correct signature image based on the one or more signature images of which the input has been received and stores the allowable range in the user DB 500. As a result, the seal imprint comparison unit 904 can store the information that reflects the habit of the authorized person who owns the personal seal at the time of affixing to be an index that makes it possible to determine whether or not the signature is valid.

The information registration unit 907 generates, for example, the allowable range of the thickness of the line forming the correct signature image and stores the allowable range in the user DB 500. As a result, the seal imprint comparison unit 904 can store the information that reflects the habit of the authorized person who owns the personal seal at the time of affixing to be an index that makes it possible to determine whether or not the signature is valid.

The information registration unit 907 generates, for example, the distribution situation of the thickness of the line forming the correct signature image and stores the distribution situation in the user DB 500. As a result, the seal imprint comparison unit 904 can store the information that reflects the habit of the authorized person who owns the personal seal at the time of affixing to be an index that makes it possible to determine whether or not the signature is valid.

The information registration unit 907 generates, for example, the histogram of the color of the correct signature image and stores the histogram in the user DB 500. As a result, the seal imprint comparison unit 904 can store the information that reflects the features of the stamp pad used when the authorized person who owns the personal seal affixes a seal to be an index that makes it possible to determine whether or not the signature is valid.

The output unit 908 outputs a processing result of any one of the functional units. An output format is, for example, display on a display, print output to a printer, transmission to an external device by the network I/F 303, or storage in a storage area such as the memory 302 or the recording medium 305. As a result, the output unit 908 can notify the user of the processing result of each functional unit and improve convenience of the generation device 100.

The output unit 908 outputs the generated electronic document with the signature image. The output unit 908 outputs the generated electronic document with the signature image to the submission destination, for example, based on the submission destination stored in the application DB 600 in association with the specified electronic document. The submission destination is, for example, the external organization terminal 203. As a result, the output unit 908 can enable the electronic document with the signature image to be referred by an external organization.

The output unit 908 outputs the generated signature information. The output unit 908 outputs the generated signature information together with the generated electronic document with the signature image to the submission destination, for example, based on the submission destination stored in the application DB 600 in association with the specified electronic document. The submission destination is, for example, the external organization terminal 203. As a result, the output unit 908 can enable the signature information and the electronic document with the signature image to be referred by an external organization.

In a case where it is determined that the signature is invalid, the output unit 908 outputs an alert to an authorized person who owns a personal seal. The alert indicates, for example, a result of determining that the signature is invalid. The output destination is, for example, the business processing terminal 201 that is used by the authorized person who owns the personal seal.

For example, in a case where it is determined by the seal imprint comparison unit 904 that the signature images are not the same as or similar to each other, the output unit 908 outputs an alert. As a result, the output unit 908 can make it easier to prevent unauthorized use of a personal seal. Furthermore, the output unit 908 may include information that enables to approve generation of the electronic document with the signature image by the authorized person who owns the personal seal, in the alert. Therefore, the output unit 908 can generate the electronic document with the signature image without depending on the determination by the seal imprint comparison unit 904.

For example, in a case where it is determined by the seal imprint comparison unit 904 that the features of the signature images do not match each other, the output unit 908 outputs an alert. As a result, the output unit 908 can make it easier to prevent unauthorized use of a personal seal. Furthermore, the output unit 908 may include information that enables to approve generation of the electronic document with the signature image by the authorized person who owns the personal seal, in the alert. Therefore, the output unit 908 can generate the electronic document with the signature image without depending on the determination by the seal imprint comparison unit 904.

### (Operation Example of Generation Device 100)

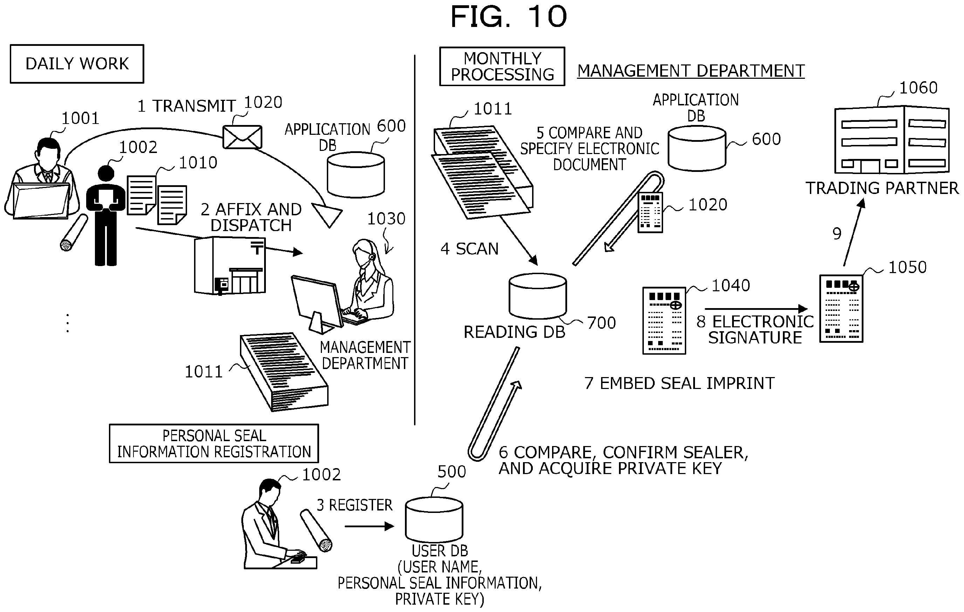

Next, an operation example of the generation device 100 will be described with reference to FIG. 10.

FIG. 10 is an explanatory diagram illustrating an operation example of the generation device 100. In FIG. 10, it is assumed that an employee 1001 and an employee 1002 who owns a personal seal work in any one of locations of an organization.

(10-1) The employee 1001 generates a paper document 1010 and an electronic document 1020 that correspond to each other and electronically transmits the electronic document 1020 to a management department. Specifically, a transmission destination is the generation device 100.

The employee 1001 transmits the electronic document 1020 to the generation device 100, for example, via an email, a web form, or the like. At this time, the employee 1001 may transmit information used to specify an applicant, information used to specify a submission destination of the electronic document 1020, or the like to the generation device 100, together with the electronic document 1020.

Therefore, in the management department, the generation device 100 accumulates the electronic document 1020 in the application DB 600. The generation device 100 may accumulate the electronic document 1020 in association with the information used to specify the applicant, the information used to specify the submission destination of the electronic document 1020, or the like, in the application DB 600.

(10-2) The employee 1001 hands the paper document 1010 to the employee 1002, and the employee 1002 confirms the paper document 1010 and affixes a seal to the paper document 1010. Furthermore, there may be a case where the employee 1002 does not exist and the employee 1001 affixes the seal to the paper document 1010.

The employee 1001 physically dispatches the stamped paper document 1010 to the management department. The dispatch is, for example, mail, in-house mail, or the like. Therefore, in the management department, a collection 1011 of the stamped paper documents 1010 is stored.

(10-3) The employee 1002 registers seal related information regarding the personal seal of himself/herself in the user DB 500. For example, the employee 1002 affixes the personal seal of the employee 1002 to a prescribed registration sheet a predetermined number of times and submits the stamped registration sheet to the management department. The predetermined number of times is, for example, 10 times. For proof of identity, it is preferable for the employee 1002 to actually visit the management department and submit the prescribed registration sheet to the management department.

For example, it is preferable for the employee 1002 to actually visit the management department, and causes a person in charge 1030 in the management department to confirm that the employee 1002 has affixed the personal seal of the employee 1002 to the prescribed registration sheet the predetermined number of times. For example, in a case where the employee 1002 dispatches the stamped registration sheet to the management department, the person in charge 1030 may confirm certainty of the stamped registration sheet to the employee 1002 by calling the employee 1002.

The person in charge 1030 causes the generation device 100 to read the stamped registration sheet. The generation device 100 stores an ID of the employee 1002, a representative seal imprint image, the seal related information, and the signature related information in association, in the user DB 500, based on the read stamped registration sheet. Specific examples of registering the seal related information will be described later, for example, with reference to FIGs. 11 to 16.

(10-4) The generation device 100 monthly reads each stamped paper document 1010 included in the collection 1011 using a scanner or an imaging device based on an operation input of the person in charge 1030, generates read information, and stores the read information in the reading DB 700.

The read information includes, for example, a document image obtained by imaging the stamped paper document 1010 and a seal imprint image obtained by imaging a seal imprint stamped of the stamped paper document 1010. The read information may include, for example, content written in the stamped paper document 1010, recognized by an OCR from the stamped paper document 1010. The content written in the stamped paper document 1010 is, for example, a value for each item. The value of the item is, for example, a character string. The item is, for example, a reference number.

(10-5) The generation device 100 compares content indicated by each electronic document 1020 of the application DB 600 with the content written in any one of the stamped paper documents 1010. The generation device 100 specifies an electronic document 1020 corresponding to any one of the stamped paper documents 1010 based on the comparison result. The content indicated by the electronic document 1020 is, for example, a character string.

For example, the generation device 100 calculates a matching degree between an entire character string indicated by each electronic document 1020 and an entire character string written in any one of the stamped paper documents 1010 and specifies an electronic document 1020 of which the matching degree is equal to or higher than a certain value. A unit of the matching degree is, for example, %. At this time, the generation device 100 may specify the electronic document 1020 with the highest matching degree.

Furthermore, the generation device 100 may compare a character string in a predetermined item indicated by each electronic document 1020 and a character string of the same item written in any one of the stamped paper documents 1010. Then, the generation device 100 may specify an electronic document 1020 of which the character string of the predetermined item matches that of any one of the stamped paper documents 1010, based on the comparison result.

(10-6) The generation device 100 collates a seal imprint image of any one of the stamped paper documents 1010 of which the electronic document 1020 has been specified with the seal imprint image and the seal related information stored in the user DB 500, and determines validity of the seal, and then, specifies a sealer.

The seal related information includes, for example, information indicating features of a deviation of inclination of the correct seal imprint image. The seal related information includes, for example, information indicating features of a pressure distribution based on the correct seal imprint image. The seal related information includes, for example, information indicating features of a color of the correct seal imprint image. The seal related information includes, for example, information indicating an amount of a blur of the correct seal imprint image or features of a habit of a seal.

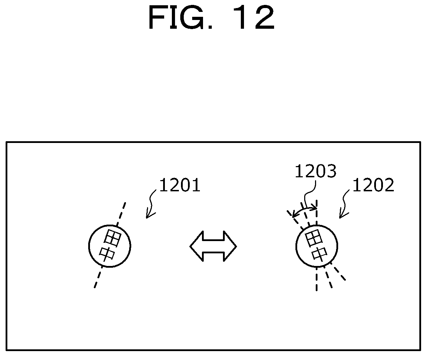

Specific examples will be described later with reference to FIGs. 12 to 16 in which the generation device 100 determines validity of a seal by collating the seal imprint image of the stamped paper document 1010 and the seal imprint image and the seal related information stored in the user DB 500.

The generation device 100 aligns, for example, the inclination of the seal imprint image of the stamped paper document 1010 and the inclination of the seal imprint image stored in the user DB 500 and specifies the seal imprint image stored in the user DB 500 that is similar to the seal imprint image of the stamped paper document 1010. In a case where the seal imprint image that is stored in the user DB 500 and is similar to the seal imprint image of the stamped paper document 1010 is not specified, the generation device 100 outputs an alert based on the contact stored in the personnel DB 400.

If the features of the seal imprint image of the stamped paper document 1010 are similar to the features of the specified seal imprint image indicated by the seal related information, the generation device 100 specifies a sealer indicated by the ID stored in the user DB 500 in association with the specified seal imprint image. In a case where the features of the seal imprint image of the stamped paper document 1010 are not similar to the features of the specified seal imprint image indicated by the seal related information, the generation device 100 outputs an alert based on the contact stored in the personnel DB 400. At this time, the generation device 100 may output the alert to the person in charge 1030.

(10-7) In a case where the sealer is specified, the generation device 100 determines that the seal of the stamped paper document 1010 is valid and the content written in the stamped paper document 1010 is approved by the sealer. The generation device 100 acquires a private key and a certificate corresponding to the sealer, with reference to the user DB 500. A pair of the private key and the certificate may be a pair of a private key and a certificate regarding an organization to which the sealer belongs, not the sealer.

The generation device 100 specifies a seal space of the specified electronic document 1020 and synthesizes the seal imprint image of the stamped paper document 1010 with the specified seal space so as to generate an electronic document 1040 with a seal imprint image. For example, the generation device 100 specifies an object of which name in the electronic document is "Square/Rectangle" or "Rectangle" corresponding to a position of the seal imprint image in the stamped paper document 1010 as the seal space.

(10-8) The generation device 100 further adds signature information to the electronic document 1040 with the seal imprint image, based on the pair of the private key and the certificate and generates an electronic document 1050 with a seal imprint image to which the signature information has been added. The signature information is, for example, in a format of an xml signature. The generation device 100 generates the signature information by encrypting a hash value of the electronic document 1040 with the seal imprint image, for example, by using the private key. There may be a case where the generation device 100 uses an e-seal instead of the signature information.

(10-9) The generation device 100 refers to the application DB 600 and transmits the electronic document 1050 with the seal imprint image to which the signature information has been added to a trading partner 1060 to be a submission destination. The generation device 100 transmits, for example, the electronic document 1050 with the seal imprint image to which the signature information has been added to an external organization terminal 203 owned by the trading partner 1060.

As a result, when generating the electronic document 1050 with the seal imprint image to which the signature information has been added, the generation device 100 can reduce a work load on a worker such as the person in charge 1030 in the management department. Furthermore, the generation device 100 can make it easier to use the paper document 1010 and the electronic document 1020 together in an organization. Therefore, the generation device 100 can reduce personnel costs and monetary costs in the organization and can make it easier to maintain business continuity.

Since the generation device 100 searches for the seal imprint image similar to the seal imprint image of the stamped paper document 1010 from among the seal imprint images stored in the user DB 500, the generation device 100 can determine whether or not the seal is valid and can make it easier to prevent unauthorized use of the personal seal.

Since the generation device 100 determines the similarity between the features of the seal imprint image of the stamped paper document 1010 and the features of the specified seal imprint image indicated by the seal related information, the generation device 100 can determine whether or not the seal is valid and can make it easier to prevent unauthorized use of the personal seal.

The generation device 100 synthesizes the seal imprint image of the stamped paper document 1010 with the seal space of the electronic document 1020 so as to generate the electronic document 1040 with the seal imprint image. The generation device 100 can generate the electronic document 1040 with the seal imprint image based on the seal imprint image actually stamped on the stamped paper document 1010, not a sample of the seal imprint image registered in advance independently of the stamped paper document 1010.

Therefore, when confirming reliability of the electronic document 1040 with the seal imprint image in the future, the generation device 100 can compare the seal imprint image of the stamped paper document 1010 with the seal imprint image synthesized with the electronic document 1040 with the seal imprint image. Unlike a case where the sample of the seal imprint image registered in advance is synthesized with the seal space of the electronic document 1020, the generation device 100 can reconfirm the reliability of the electronic document 1040 with the seal imprint image.

In a case where the sample of the seal imprint image registered in advance is synthesized with the seal space of the electronic document 1020, even if the seal imprint image of the stamped paper document 1010 is compared with the seal imprint image synthesized with the seal space of the electronic document 1020, it is considered that it is difficult to confirm the reliability of the electronic document 1020.

After the stamped paper document 1010 is lost or discarded, the generation device 100 can refer to the seal imprint image of the stamped paper document 1010 synthesized with the electronic document 1040 with the seal imprint image. Therefore, the generation device 100 can compare the seal imprint image of the stamped paper document 1010 synthesized with the electronic document 1040 with the seal imprint image, with an actual seal imprint of the personal seal. As a result, the generation device 100 can confirm the reliability of the electronic document 1040 with the seal imprint image without the stamped paper document 1010.

### (Example of Determining Validity of Seal)

Next, an example will be described where the generation device 100 determines validity of a seal, with reference to FIGs. 11 to 15. First, with reference to FIG. 11, an example will be described where the generation device 100 registers seal related information indicating a criteria used to determine validity of a seal in the user DB 500.

FIG. 11 is an explanatory diagram illustrating an example of registering the seal related information. In FIG. 11, it is assumed that an employee who officially owns a personal seal affix the personal seal of the employee to a prescribed registration sheet 1100, 10 times. A dotted line in FIG. 11 indicates a centerline of a seal imprint. The centerline corresponds, for example, to an arrangement direction of a character string in the seal imprint. The dotted line in FIG. 11 is not a line written in the registration sheet 1100. The generation device 100 reads the prescribed registration sheet 1100 and acquires seal imprint images obtained by imaging seal imprints 1101 to 1110 for 10 times. The seal imprints 1101 to 1110 are, for example, red.

The generation device 100 generates seal related information, based on the seal imprint images obtained by imaging the seal imprints 1101 to 1110 for 10 times. For example, the generation device 100 calculates an average value of inclination of centerlines of the seal imprints 1101 to 1110 and sets a range of - 10° to + 10° from the calculated average value as an allowable range of the inclination of the seal imprint. The generation device 100 generates the seal related information so as to include information used to specify the set allowable range of the inclination of the seal imprint in the seal related information. A method of using the seal related information including the information used to specify the allowable range of the inclination of the seal imprint will be described later, for example, with reference to FIG. 12.

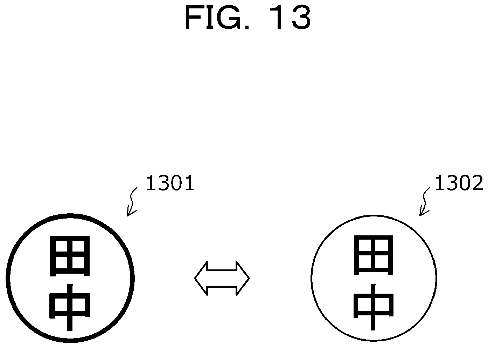

Furthermore, for example, the generation device 100 calculates an average value of thicknesses of lines forming outer frames and character strings in the seal imprints 1101 to 1110 and sets a predetermined range centered on the calculated average value as an allowable range of the thicknesses of the lines forming the outer frames and the character strings of the seal imprint. The generation device 100 generates the seal related information so as to include the information used to specify the set allowable range of the thickness of the line in the seal related information. A method of using the seal related information including the information used to specify the allowable range of the thickness of the line will be described later, for example, with reference to FIG. 13.

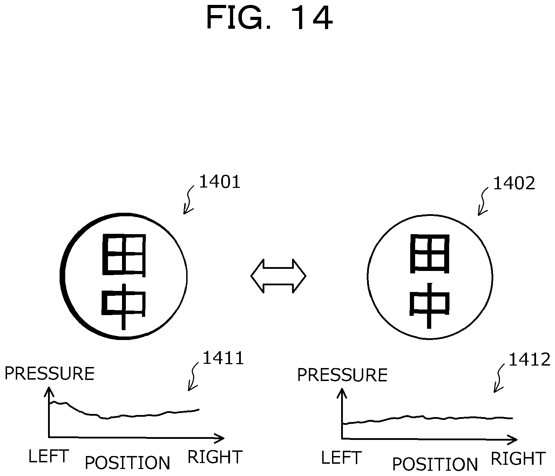

Furthermore, the generation device 100 specifies a representative pressure distribution of the seal imprints 1101 to 1110, for example, based on the thicknesses of the lines forming the outer frames and the character strings in the seal imprints 1101 to 1110. The generation device 100 generates the seal related information so as to include the information used to specify the specified representative pressure distribution in the seal related information. A method of using the seal related information including the information used to specify the representative pressure distribution will be described, for example, with reference to FIG. 14.

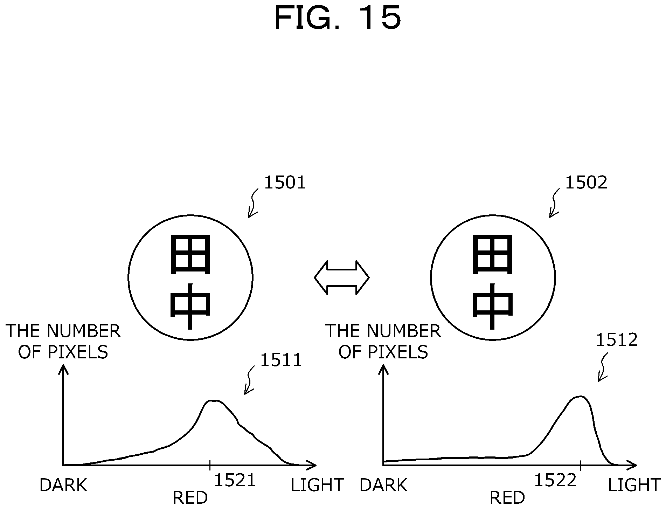

Furthermore, the generation device 100 specifies a representative red histogram of the seal imprints 1101 to 1110, for example, based on brightness of red regarding the outer frames and the character strings in the seal imprints 1101 to 1110. The generation device 100 generates the seal related information so as to include information used to specify the specified representative red histogram in the seal related information. A method of using the seal related information including the information used to specify the representative red histogram will be described later, for example, with reference to FIG. 15. Next, description proceeds to FIG. 12.

FIG. 12 is an explanatory diagram illustrating an example of determining validity of a seal based on the seal related information including information used to specify an allowable range of inclination of a seal imprint. In the example in FIG. 12, it is assumed that the generation device 100 acquire a seal imprint image obtained by imaging a seal imprint 1201 written on any paper document. The generation device 100 specifies inclination of a seal imprint that is properly stamped is within an allowable range 1203 as a seal imprint 1202, based on the seal related information.

The generation device 100 determines whether or not the inclination of the seal imprint 1201 indicated by the acquired seal imprint image is within the allowable range 1203. Here, since the inclination of the seal imprint 1201 indicated by the acquired seal imprint image is outside the allowable range 1203, the generation device 100 determines that the seal is invalid, and outputs an alert to a contact corresponding to the employee who officially owns the personal seal. As a result, the generation device 100 can prevent unauthorized use of the personal seal.

For example, it is assumed that, when the employee who officially owns the personal seal is right handed, a valid seal imprint stamped by the employee tend to incline leftward as the seal imprint 1202. On the other hand, a situation is considered in which an attacker who misuses the personal seal is left handed and an invalid seal imprint, as the seal imprint 1201, stamped by the attacker is inclined rightward.

For this situation, the generation device 100 can detect that there is a possibility that the personal seal is misused and the seal is invalid based on the inclination of the seal imprint and can make it easier to prevent misuse of the personal seal. Even if shapes of the seal imprints 1201 and 1202 are similar, the generation device 100 can detect that there is a possibility that the personal seal is misused and the seal is invalid. Next, description proceeds to FIG. 13.

FIG. 13 is an explanatory diagram illustrating an example of determining validity of a seal based on the seal related information including the information used to specify the allowable range of the thickness of the line. In the example in FIG. 13, it is assumed that the generation device 100 acquire a seal imprint image obtained by imaging a seal imprint 1301 written on any paper document. The generation device 100 specifies that a thickness of a line as in a seal imprint 1302 is a thickness of a line forming a seal imprint that is properly stamped and a predetermined range centered on the thickness of the line as in the seal imprint 1302 is an allowable range of the thickness of the line, based on the seal related information.

The generation device 100 determines whether or not the thickness of the line forming the seal imprint 1301 indicated by the acquired seal imprint image is within the specified allowable range. Here, since the thickness of the line forming the seal imprint 1301 indicated by the acquired seal imprint image is outside the allowable range, the generation device 100 determines that the seal is invalid, and outputs an alert to a contact corresponding to the employee who officially owns the personal seal. As a result, the generation device 100 can prevent unauthorized use of the personal seal.

For example, it is assumed that the employee who officially owns the personal seal have a habit for not relatively applying a pressure at the time of affixing and the valid seal imprint, as the seal imprint 1302, stamped by the employee tend to have a relatively thin thickness of the line. On the other hand, a situation is considered in which an attacker who misuses the personal seal has a habit of relatively applying a pressure at the time of affixing and a thickness of a line of a seal imprint stamped by the attacker, as the seal imprint 1301, becomes relatively thicker.

For this situation, the generation device 100 can detect that there is a possibility that the personal seal is misused and the seal is invalid based on the thickness of the line forming the seal imprint, and can make it easier to prevent misuse of the personal seal. Even if shapes of the seal imprints 1301 and 1302 are similar, the generation device 100 can detect that there is a possibility that the personal seal is misused and the seal is invalid.

Furthermore, for example, it is assumed that the employee use a personal seal formed to have a relatively thin thickness of a line and a thickness of a line of the valid seal imprint stamped by the employee, as the seal imprint 1302, tend to be relatively thin. On the other hand, a situation is considered in which the attacker forges a personal seal formed to have a relatively thick line and a thickness of a line of a seal imprint stamped by the attacker, as the seal imprint 1301, becomes relatively thicker.

For this situation, the generation device 100 can detect that there is a possibility that the seal is invalid based on the thickness of the line forming the seal imprint. Even if the shapes of the seal imprints 1301 and 1302 are similar, the generation device 100 can detect that there is a possibility that the seal is invalid. Next, description proceeds to FIG. 14.

FIG. 14 is an explanatory diagram illustrating an example of determining validity of a seal based on the seal related information including information used to specify a representative pressure distribution. In the example in FIG. 14, it is assumed that the generation device 100 acquire a seal imprint image obtained by imaging a seal imprint 1401 written on any paper document. The generation device 100 specifies that a seal imprint that is properly stamped, as a seal imprint 1402, has no blur of a line and a uniform thickness of the line based and a pressure distribution as a graph 1412 is a representative pressure distribution of the seal imprint that is properly stamped, based on a seal related information of a graph 1412.

The graph 1412 illustrates a horizontal pressure distribution with reference to the centerline of the seal imprint 1402. Here, for simplification of explanation, a case will be described where the generation device 100 uses the horizontal pressure distribution with reference to the centerline of the seal imprint 1402. However, there may be a case where a pressure distribution of an entire plane is used with reference to the center point of the seal imprint 1402.

The generation device 100 determines whether or not a pressure distribution of the seal imprint 1401 indicated by the acquired seal imprint image is similar to the specified representative pressure distribution. The pressure distribution of the seal imprint 1401 indicated by the acquired seal imprint image is a pressure distribution of a graph 1411.

The graph 1411 illustrates a horizontal pressure distribution with reference to the centerline of the seal imprint 1401. Here, for simplification of explanation, a case will be described where the generation device 100 uses the horizontal pressure distribution with reference to the centerline of the seal imprint 1401. However, there may be a case where a pressure distribution of an entire plane is used with reference to the center point of the seal imprint 1401.

Here, since the pressure distribution of the seal imprint 1401 indicated by the acquired seal imprint image is not similar to the specified representative pressure distribution, the generation device 100 determines that the seal is invalid, and outputs an alert to the contact corresponding to the employee who officially owns the personal seal. As a result, the generation device 100 can prevent unauthorized use of the personal seal.

For example, it is assumed that the employee who officially owns the personal seal tends to vertically affix the personal seal and the valid seal imprint stamped by the employee, as the seal imprint 1402, tend to indicate no horizontal bias of the pressure in the pressure distribution. On the other hand, a situation is considered in which the attacker who misuses the personal seal has a habit of affixing the personal seal with inclination and the invalid seal imprint stamped by the attacker, as the seal imprint 1401, has a relatively high pressure on the left side in the pressure distribution.

For this situation, the generation device 100 can detect that there is a possibility that the personal seal is misused and the seal is invalid, based on the pressure distribution of the seal imprint and can make it easier to prevent misuse of the personal seal. Even if shapes of the seal imprints 1401 and 1402 are similar, the generation device 100 can detect that there is a possibility that the personal seal is misused and the seal is invalid. Next, description proceeds to FIG. 15.

FIG. 15 is an explanatory diagram illustrating an example of determining validity of a seal based on the seal related information including information used to specify a representative red histogram. In the example in FIG. 15, it is assumed that the generation device 100 acquire a seal imprint image obtained by imaging a seal imprint 1501 written on any paper document. Based on the seal related information, the generation device 100 specifies that a representative red contrast histogram of a seal imprint that is properly stamped, as a seal imprint 1502, is a red contrast histogram in a graph 1512.

The graph 1512, for example, a graph indicating how much an element with each red brightness is included in the seal imprint 1502. As illustrated in the graph 1512, it is assumed that the most elements with brightness 1522 tend to be included in the properly stamped seal imprint, as the seal imprint 1502.

The generation device 100 determines whether or not a red contrast histogram of the seal imprint 1501 indicated by the acquired seal imprint image is similar to the specified representative red contrast histogram. The red contrast histogram of the seal imprint 1501 indicated by the acquired seal imprint image is a red contrast histogram indicated by a graph 1511.

The graph 1511 is a graph indicating how much an element with each red brightness is included in the seal imprint 1501. As illustrated in the graph 1511, it is assumed that the most elements with the brightness 1521 be included in the seal imprint 1501 indicated by the acquired seal imprint image.

Here, since the red contrast histogram of the seal imprint 1501 indicated by the acquired seal imprint image is not similar to the specified representative red contrast histogram, the generation device 100 determines that the seal is invalid. Then, the generation device 100 outputs an alert to the contact corresponding to the employee who officially owns the personal seal.

For example, as illustrated in the graph 1512, the seal imprint that is properly stamped includes the most elements with the brightness 1522. However, the generation device 100 determines that the most elements with the brightness 1521 are included in the seal imprint indicated by the acquired seal imprint image, as illustrated in the graph 1511. Therefore, the generation device 100 determines that the red contrast histograms are not similar to each other, determines that the seal is invalid, and outputs an alert to the contact corresponding to the employee who officially owns the personal seal. As a result, the generation device 100 can prevent unauthorized use of the personal seal.

For example, the employee who officially owns the personal seal uses a stamp pad with strong red brightness 1521, and it is assumed that the most elements with the brightness 1521 tend to be included in the red contrast histogram, in the valid seal imprint stamped by the employee, as in the graph 1511. On the other hand, a situation is considered in which the attacker who misuses the personal seal uses the stamp pad with strong red brightness 1522 and the most elements with the brightness 1522 in the red contrast histogram are included in the invalid seal imprint stamped by the attacker, as in the graph 1512.

For this situation, the generation device 100 can detect that there is a possibility that the personal seal is misused and the seal is invalid based on the red contrast histogram of the seal imprint and can make it easier to prevent misuse of the personal seal. Even if shapes of the seal imprints 1501 and 1502 are similar, the generation device 100 can detect that there is a possibility that the personal seal is misused and the seal is invalid.

### (Overall Processing Procedure)

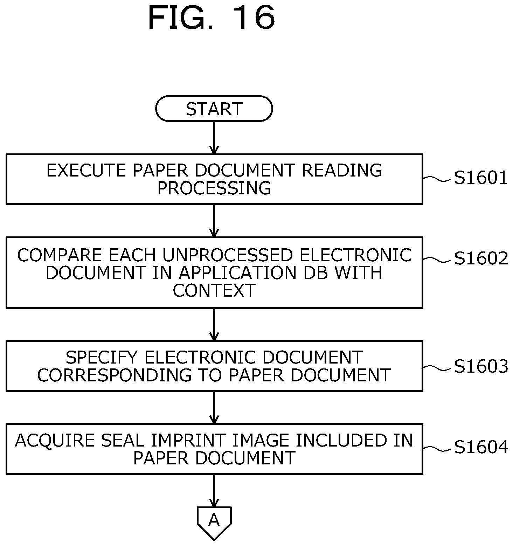

Next, an example of an overall processing procedure executed by the generation device 100 will be described with reference to FIGs. 16 to 18. The overall processing is implemented by, for example, the CPU 301, the storage area such as the memory 302 or the recording medium 305, and the network I/F 303 illustrated in FIG. 3.

FIGs. 16 to 18 are flowcharts illustrating an example of the overall processing procedure. In FIG. 16, the generation device 100 executes paper document reading processing (step S1601). The paper document is, for example, mailed to the management department to be a target of reading processing by the generation device 100, based on an operation input of a person in charge in the management department.

Next, the generation device 100 compares text with each unprocessed electronic document of the application DB 600 (step S1602). Then, the generation device 100 specifies an electronic document corresponding to the paper document, based on the comparison result (step S1603).

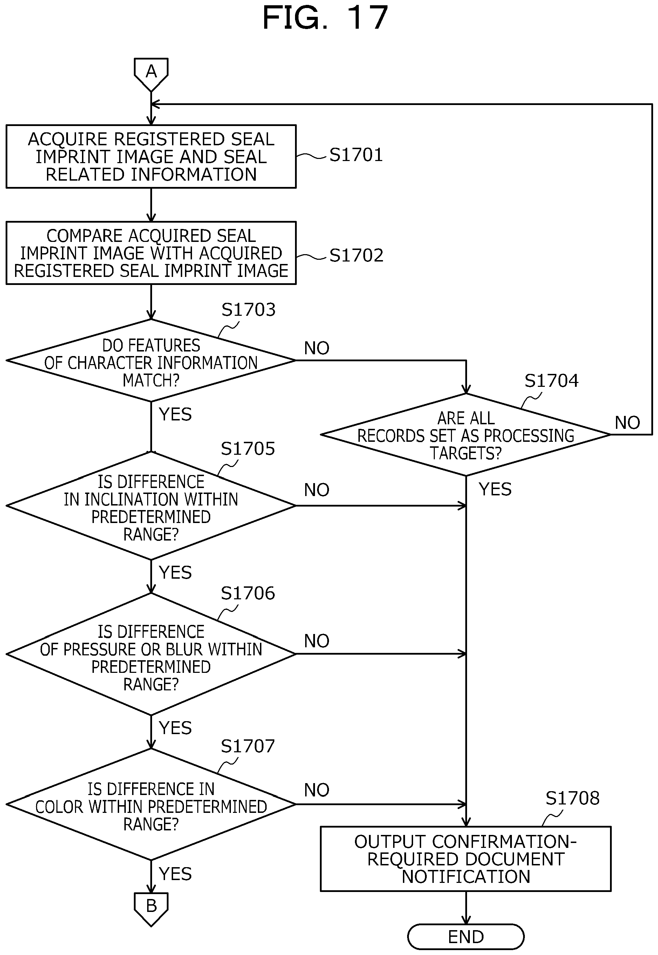

Next, the generation device 100 acquires a seal imprint image included in the paper document, based on the reading result of the paper document (step S1604). Then, the generation device 100 proceeds to processing in step S1701 in FIG. 17.

In FIG. 17, the generation device 100 acquires a registered seal imprint image and seal related information included in one record as assuming the one record in the user DB 500 as a processing target (step S1701). Next, the generation device 100 compares the acquired seal imprint image with the acquired registered seal imprint image (step S1702).

Then, the generation device 100 determines whether or not features of character information match, based on the comparison result (step S1703). Here, in a case where the features of the character information do not match (step S1703: No), the generation device 100 proceeds to processing in step S1704. On the other hand, in a case where the features of the character information match (step S1703: Yes), the generation device 100 proceeds to processing in step S1705.

In step S1704, the generation device 100 determines whether or not all the records are set as processing targets (step S1704). Here, in a case where all the records are set as processing targets (step S1704: Yes), the generation device 100 proceeds to processing in step S1708. On the other hand, in a case where a record that is not set as a processing target remains (step S1704: No), the generation device 100 returns to the processing in step S1701.

In step S1705, the generation device 100 determines whether or not a difference in the inclination is within a predetermined range (step S1705). Here, in a case where the difference in the inclination is within the predetermined range (step S1705: Yes), the generation device 100 proceeds to processing in step S1706. On the other hand, in a case where the difference in the inclination is not within the predetermined range (step S1705: No), the generation device 100 proceeds to processing in step S1708.

In step S1706, the generation device 100 determines whether or not a difference in a pressure or blur is within a predetermined range (step S1706). Here, in a case where the difference in the pressure or blur is within the predetermined range (step S1706: Yes), the generation device 100 proceeds to processing in step S1707. On the other hand, in a case where the difference in the pressure or blur is not within the predetermined range (step S1706: No), the generation device 100 proceeds to processing in step S1708.

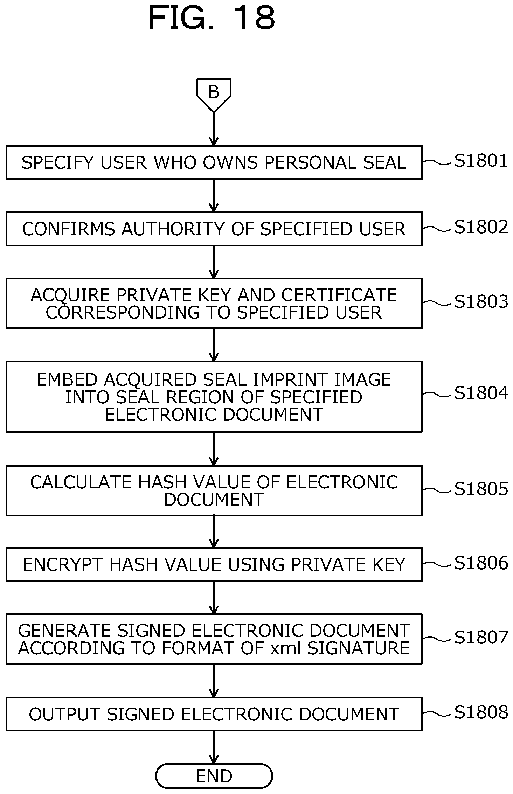

In step S1707, the generation device 100 determines whether or not a difference in a color is within a predetermined range (step S1707). Here, in a case where the difference in the color is within the predetermined range (step S1707: Yes), the generation device 100 proceeds to processing in step S1801 in FIG. 18. On the other hand, in a case where the difference in the color is not within the predetermined range (step S1707: No), the generation device 100 proceeds to processing in step S1708.

In step S1708, the generation device 100 outputs a confirmation-required document notification (step S1708). Then, the generation device 100 ends the overall processing.

In FIG. 18, the generation device 100 specifies a user who owns the personal seal (step S1801).

Next, the generation device 100 confirms authority of the specified user with reference to the user DB 500 (step S1802). Then, the generation device 100 acquires a private key and a certificate corresponding to the specified user, from the user DB 500 (step S1803).

Next, the generation device 100 embeds the acquired seal imprint image into a seal region of the specified electronic document (step S1804). Then, the generation device 100 calculates a hash value of the electronic document (step S1805).

Next, the generation device 100 encrypts the hash value using the private key (step S1806). Then, the generation device 100 generates a signed electronic document according to a format of an xml signature (step S1807).

Next, the generation device 100 outputs the signed electronic document (step S1808). Then, the generation device 100 ends the overall processing.

Here, the generation device 100 may execute the processing in some steps in each of the flowcharts of FIGs. 16 to 18 in a different order. For example, the order of the processing in steps S1705 to S1707 may be exchanged. Furthermore, the generation device 100 may omit the processing in some steps in each of the flowcharts in FIGs. 16 to 18. For example, any processing in steps S1705 to S1707 can be omitted.

As described above, according to the generation device 100, it is possible to acquire the plurality of electronic documents and the read information generated from the reading result of the paper document. According to the generation device 100, it is possible to specify the electronic document corresponding to the acquired read information from among the plurality of acquired electronic documents. According to the generation device 100, it is possible to generate the electronic document with the signature image including the specified electronic document and the signature image by adding the signature image obtained by imaging the signature written or stamped on the paper document to the specified electronic document. As a result, when generating the electronic document with the signature image, the generation device 100 can reduce the work load on the worker.

According to the generation device 100, it is possible to generate the signature information regarding the generated electronic document with the signature image. As a result, the generation device 100 can generate the signature information to be output together with the electronic document with the signature image and improve reliability of the electronic document with the signature image.

According to the generation device 100, it is possible to specify an electronic document that includes a character string that is the same as or similar to a character string written on the paper document, from among the plurality of acquired electronic documents, based on the acquired read information and the character string included in each of the plurality of acquired electronic documents. As a result, the generation device 100 can improve accuracy of specifying the electronic document.

According to the generation device 100, it is possible to specify an electronic document that includes a character string that is the same as or similar to a character string written in a predetermined item of the paper document as a predetermined item, from among the plurality of acquired electronic documents. As a result, the generation device 100 can improve accuracy of specifying the electronic document.

According to the generation device 100, it is possible to adopt the seal imprint image obtained by imaging the seal imprint of the personal seal written on the paper document, as the signature image. As a result, the generation device 100 can be applied to a situation in which the signature image is the seal imprint image.

According to the generation device 100, it is possible to adopt a character string image obtained by imaging a handwritten character string written on the paper document, as the signature image. As a result, the generation device 100 can be applied to a situation in which the signature image is the character string image.

According to the generation device 100, it is possible to determine whether or not features of the signature image obtained by imaging the signature written or stamped on the paper document match the features of the correct signature image, with reference to the storage unit. According to the generation device 100, in a case where it is determined that the features match, it is possible to generate the electronic document with the signature image. As a result, the generation device 100 can make it easier to prevent unauthorized use of the personal seal.

According to the generation device 100, it is possible to determine whether or not the inclination of the signature image obtained by imaging the signature written or stamped on the paper document is within the allowable range of the inclination of the correct signature image, with reference to the storage unit. According to the generation device 100, in a case where the inclination is within in the allowable range, it is possible to determine that the features of the signature image obtained by imaging the signature written or stamped on the paper document match the features of the correct signature image. As a result, the generation device 100 can detect that there is a possibility that the personal seal is misused and the seal is invalid based on the inclination of the seal imprint and can make it easier to prevent misuse of the personal seal.

According to the generation device 100, it is possible to determine whether or not the thickness of the line forming the signature image obtained by imaging the signature written or stamped on the paper document is within the allowable range of the thickness of the line forming the correct signature image, with reference to the storage unit. According to the generation device 100, in a case where the inclination is within in the allowable range, it is possible to determine that the features of the signature image obtained by imaging the signature written or stamped on the paper document match the features of the correct signature image. As a result, the generation device 100 can detect that there is a possibility that the personal seal is misused and the seal is invalid based on the thickness of the line forming the seal imprint, and can make it easier to prevent misuse of the personal seal.

According to the generation device 100, it is possible to determine whether or not the distribution situation of the thickness of the line forming the signature image obtained by imaging the signature written or stamped on the paper document matches the distribution situation of the thickness of the line forming the correct signature image, with reference to the storage unit. According to the generation device 100, in a case where the distribution situations match, it is possible to determine that the features of the signature image obtained by imaging the signature written or stamped on the paper document match the features of the correct signature image. As a result, the generation device 100 can detect that there is a possibility that the personal seal is misused and the seal is invalid based on the pressure distribution of the seal imprint and can make it easier to prevent misuse of the personal seal.

According to the generation device 100, it is possible to determine whether or not the color of the signature image obtained by imaging the signature written or stamped on the paper document matches the color of the correct signature image, with reference to the storage unit. According to the generation device 100, in a case where the distribution situations match, it is possible to determine that the features of the signature image obtained by imaging the signature written or stamped on the paper document match the features of the correct signature image. As a result, the generation device 100 can detect that there is a possibility that the personal seal is misused and the seal is invalid based on the red contrast histogram of the seal imprint and can make it easier to prevent misuse of the personal seal.

According to the generation device 100, it is possible to receive input of one or more signature images by the user. According to the generation device 100, it is possible to generate the information regarding the features of the correct signature image based on the one or more signature images of which the input has been received and store the information in the storage unit. As a result, the generation device 100 can reduce a work load applied when the information regarding the features of the correct signature image is registered in the storage unit.

According to the generation device 100, it is possible to determine whether or not the signature image obtained by imaging the signature written or stamped on the paper document is the same as or similar to the correct signature image with reference to the storage unit. According to the generation device 100, in a case where it is determined that the signature images are the same or similar, it is possible to generate the electronic document with the signature image. As a result, the generation device 100 can make it easier to prevent unauthorized use of the personal seal. Furthermore, the generation device 100 can specify whether or not the signature image obtained by imaging the signature written or stamped on the paper document corresponds to the correct signature image and specify a writer who has written the signature on the paper document.

According to the generation device 100, it is possible to specify the private key corresponding to the signature written or stamped on the paper document. According to the generation device 100, it is possible to generate the signature information using the specified private key. As a result, the generation device 100 can reduce the work load when generating the signature information.

According to the generation device 100, it is possible to acquire the plurality of electronic documents and the plurality of pieces of read information respectively generated from the reading results of the different paper documents. According to the generation device 100, it is possible to specify an electronic document corresponding to any one of the plurality of pieces of acquired read information, from among the plurality of acquired electronic documents. As a result, the generation device 100 can collectively process the plurality of electronic documents and the plurality of pieces of read information respectively generated from the reading results of the different paper documents and can reduce the work load. The generation device 100 can implement, for example, monthly processing for collectively setting the electronic documents and the read information as a processing target.

According to the generation device 100, it is possible to output the generated electronic document with the signature image. As a result, the generation device 100 can enable the user to refer to the electronic document with the signature image.

According to the generation device 100, it is possible to output the generated signature information. As a result, the generation device 100 can enable the user to refer to the signature information.

According to the generation device 100, it is possible to output an alert in a case where it is determined that there is no match. As a result, the generation device 100 can enable the user to grasp that there is a possibility that the personal seal is used in an unauthorized manner.

Note that the generation method described in the present embodiment may be implemented by executing a prepared program on a computer such as a PC or a workstation. The generation program described in the present embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), or the like. Furthermore, the generation program described in the present embodiment may be distributed via a network such as the Internet.

### CITATION LIST

### PATENT DOCUMENT

Patent Document 1: Japanese Laid-open Patent Publication No. 2011-086018

### REFERENCE SIGNS LIST

100 generation device
110, 1020, 1040, 1050 electronic document
120, 1010 paper document
130 read information
140 signature image
200 business processing system
201 business processing terminal
202 management department terminal
203 external organization terminal
210 network
300, 800 bus
301, 801 CPU
302, 802 memory
303, 803 network I/F
304, 804 recording medium I/F
305, 805 recording medium
400 personnel DB
500 user DB
600 application DB
700 reading DB
806 display
807 input device
900 storage unit
901 input unit
902 seal imprint extraction unit
903 document comparison unit
904 seal imprint comparison unit
905 signature related information acquisition unit
906 electronic signature creation unit
907 information registration unit
908 output unit
910 control unit
1001, 1002 employee
1011 collection
1030 person in charge
1060 trading partner
1100 registration sheet
1101 to 1110, 1201, 1202, 1301, 1302, 1401, 1402, 1501, 1502 seal imprint
1411, 1412, 1511, 1512 graph
1521, 1522 brightness

## Claims

1. A generation method in which a computer executes processing comprising:
acquiring read information generated from a reading result of a paper document; and
generating an electronic document with a signature image that includes the electronic document and the signature image by adding the signature image obtained by imaging a signature written or stamped on the paper document to an electronic document that corresponds to the acquired read information.

2. The generation method according to claim 1, in which the computer executes processing comprising:
generating signature information regarding the generated electronic document with the signature image.

3. The generation method according to claims 1 or 2, wherein
the read information includes information used to specify a character string written on the paper document,
the computer executes processing comprising:
specifying an electronic document that includes a character string same as or similar to the character string written on the paper document, from among the plurality of electronic documents, based on the acquired read information and the character string included in each of the plurality of electronic documents, wherein
the generating processing
generates an electronic document with a signature image that includes the specified electronic document and the signature image by adding the signature image obtained by imaging the signature written or stamped on the paper document, to the specified electronic document.

4. The generation method according to claim 3, wherein
the specifying processing
specifies an electronic document that includes a character string same as or similar to a character string written in a predetermined item of the paper document as the predetermined item, from among the plurality of electronic documents.

5. The generation method according to any one of claims 1 to 4, wherein
the signature image is a seal imprint image obtained by imaging a seal imprint of a personal seal stamped on the paper document.

6. The generation method according to any one of claims 1 to 4, wherein
the signature image is a character string image obtained by imaging a handwritten character string written on the paper document.

7. The generation method according to any one of claims 1 to 6, in which the computer executes processing comprising:
determining whether or not features of the signature image obtained by imaging the signature written or stamped on the paper document match features of a correct signature image, with reference to the storage unit that stores information regarding the features of the correct signature image, wherein
the generating processing
generates the electronic document with the signature image in a case of determining that the features match.

8. The generation method according to claim 7, wherein
the storage unit stores an allowable range of inclination of the correct signature image, and
the determining processing,
in a case where inclination of the signature image obtained by imaging the signature written or stamped on the paper document is within the allowable range of the inclination of the correct signature image, determines that the features of the signature image obtained by imaging the signature written or stamped on the paper document match the features of the correct signature image, with reference to the storage unit.

9. The generation method according to claim 7 or 8, wherein
the storage unit stores an allowable range of a thickness of a line that forms the correct signature image, and
in a case where a thickness of a line that forms the signature image obtained by imaging the signature written or stamped on the paper document is within the allowable range of the thickness of the line that forms the correct signature image, it is determined that the features of the signature image obtained by imaging the signature written or stamped on the paper document match the features of the correct signature image, with reference to the storage unit.

10. The generation method according to any one of claims 7 to 9, wherein
the storage unit stores a distribution situation of the thickness of the line that forms the correct signature image, and
when a distribution situation of the thickness of the line that forms the signature image obtained by imaging the signature written or stamped on the paper document match the distribution situation of the thickness of the line that forms the correct signature image, it is determined that the features of the signature image obtained by imaging the signature written or stamped on the paper document match the features of the correct signature image, with reference to the storage unit.

11. The generation method according to any one of claims 7 to 10, wherein
the storage unit stores a color of the correct signature image, and
when a color of the signature image obtained by imaging the signature written or stamped on the paper document matches the color of the correct signature image, it is determined that the features of the signature image obtained by imaging the signature written or stamped on the paper document match the features of the correct signature image, with reference to the storage unit.

12. The generation method according to any one of claims 7 to 11, in which the computer executes processing comprising:
receiving input of one or more signature images by a user; and
generating information regarding the features of the correct signature image based on the one or more signature images of which the input has been received and storing the information in the storage unit.

13. The generation method according to any one of claims 1 to 12, in which the computer executes processing comprising:
determining whether or not the signature image obtained by imaging the signature written or stamped on the paper document is the same or similar to the correct signature image, with reference to the storage unit that stores the correct signature image, wherein
the generating processing,
in a case where it is determined that the signature images are the same or similar, generates the electronic document with the signature image.

14. The generation method according to claim 2, in which the computer executes processing comprising:
specifying a private key that corresponds to the signature written or stamped on the paper document; and
generating the signature information by using the specified private key.

15. The generation method according to claim 3 or 4, wherein
the acquiring processing
acquires a plurality of pieces of read information respectively generated from reading results of different paper documents, and
the specifying processing
specifies an electronic document that corresponds to any one of the plurality of pieces of acquired read information from among the plurality of electronic documents.

16. The generation method according to any one of claims 1 to 15, in which the computer executes processing comprising:
outputting the generated electronic document with the signature image.

17. The generation method according to claim 2 or 14, in which the computer executes processing comprising:
outputting the generated signature information.

18. The generation method according to any one of claims 7 to 12, in which the computer executes processing comprising:
outputting an alert in a case where it is determined that there is no match.

19. A non-transitory computer-readable storage medium storing a generation program for causing a computer to execute processing, the processing comprising:
acquiring read information generated from a reading result of a paper document; and
generating an electronic document with a signature image that includes the electronic document and the signature image by adding the signature image obtained by imaging a signature written or stamped on the paper document to an electronic document that corresponds to the acquired read information.

20. A generation apparatus comprising:
a control unit configured to perform:
acquiring read information generated from a reading result of a paper document; and
generating an electronic document with a signature image that includes the electronic document and the signature image by adding the signature image obtained by imaging a signature written or stamped on the paper document to an electronic document that corresponds to the acquired read information.
